## Europäisches Patentamt
## European Patent Office
## Office européen des brevets

(19)

(11) Veröffentlichungsnummer: **0 050 761**

**A2**

(12)

# EUROPÄISCHE PATENTANMELDUNG

(21) Anmeldenummer: **81108026.6**

(51) Int. Cl.³: **G 02 B 27/02**

(22) Anmeldetag: **07.10.81**

(30) Priorität: **10.10.80 DE 3038322**

(43) Veröffentlichungstag der Anmeldung:
**05.05.82 Patentblatt 82/18**

(84) Benannte Vertragsstaaten:
**BE CH FR GB LI**

(71) Anmelder: **Rollei-Werke Franke & Heidecke GmbH + Co KG**
**Salzdahlumer Strasse 196**
**D-3300 Braunschweig(DE)**

(72) Erfinder: **Sobotta, Reinhard, Ing.-grad.**
**Schreiberkamp 9**
**D-3300 Braunschweig(DE)**

(54) **Diabetrachtungsvorrichtung.**

(57) Die Erfindung betrifft eine Diabetrachtungsvorrichtung mit einer Wechseleinrichtung der Betrachtungsart für Leinwand- oder Mattscheibenprojektion. Der Wechsel der Betrachtungsart ist durch eine mechanische Zwangskoppelung von Mattscheibe (11), Spiegel (2), Gehäuse (22) und Projektionsobjektiv (5) erwirkbar. Bei Verwendung eines Projektionsobjektivs (5) mit konstanter Brennweite wird diese bei Mattscheibenprojektion durch Einbringen einer Linse zwischen das Projektionsobjektiv (5) und Spiegel (2) bzw. durch einen in elliptischer Gestalt ausgeführten Spiegel verkürzt.

FIG.3

EP 0 050 761 A2

Croydon Printing Company Ltd

R O L L E I - W E R K E
Franke & Heidecke                    18.09.1980
GmbH & Co KG                         A 1212 EU

Diabetrachtungsvorrichtung


Die Erfindung betrifft eine Diabetrachtungsvorrichtung

- mit einem Gehäuse,

- darin eine Lampe, ein Kondensorsystem und ein oder mehrere Projektionsobjektive sich befinden,

- die alle auf der optischen Achse angeordnet sind,

- diese Vorrichtung auf einer Projektionswand bzw. auf einer Mattscheibe ein Bild entsprechend einem Diapositiv erzeugt,

- die Mattscheibe als Teil der Vorrichtung aufstellbar ist

- und diese über einen Spiegel das Licht erhält,

- das Licht, welches die gesamte Bildinformation des Dias enthält.


Die Diabetrachtungsvorrichtung dient zum Sortieren, zur Qualitätskontrolle, zur Auswahl und zur Betrachtung von Diapositiven.


Diabetrachtungsvorrichtungen mit einer Möglichkeit zur Projektion auf eine Projektionswand und/oder zum Monitorbetrieb (Mattscheibenbild) sind in verschiedenen Bauformen bekannt.


Durch die erheblichen Entfernungsunterschiede von Projektionswand bzw. Mattscheibe gegenüber dem Objektiv werden zwei Objektive verschiedener Brennweiten benutzt (DE-OS 1797319).

Allgemein üblich ist, den Strahlengang für den Monitorbetrieb durch einen Spiegel umzulenken. Der Spiegel wird hierzu zwischen Kondensor und Projektionsobjektiv in den Strahlengang eingeführt. Des weiteren existiert eine Ausführungsform, die am Lichtaustritt des Projektors - also von der Lichtquelle aus betrachtet hinter dem Projektionsobjektiv - den Spiegel anordnet (DE-AS 1001500) und die Mattscheibe wegklappbar ist.

Die Verwendung zweier Objektive läßt zwar eine kleine Bauform zu, jedoch wirkt das zusätzliche Objektiv sowie die aufwendige Entwicklung der Vorrichtung zur Halterung des Objektivs kostensteigernd.

Wird der Spiegel, über den der Strahlengang zur Mattscheibe umgelenkt wird, fest installiert, so muß die Mattscheibe wegklappbar sein, um den Weg zur Projektionswand freizugeben. Diese Ausführungsform zeigt hohe Lichtverluste bei der direkten Projektion auf die Projektionswand, weil auch der Projektionsstrahlengang über den Spiegel umgelenkt wird.

Die Bedienungselemente sind bei einer der beiden Betriebsarten schlecht zugänglich, weil das Gerät in bezug auf den Betrachter für die verschiedenen Betriebsarten gedreht werden muß. Das Diamagazin ist während des Betriebs schlecht zugänglich, so daß keine Eingriffe wie Auswechseln von Dias während der Vorführung mehr möglich sind.

- 3 -    0050761

Der Erfindung liegt die Aufgabe zugrunde, eine Vorrichtung
mit möglichst wenig Bauteilen zu schaffen, die als Diabetrachtungsvorrichtung bei kompakter, flacher Bauweise
zu einer lichtstarken Projektion auf eine Projektionswand
geeignet ist und zudem durch einfache Handhabung mit Hilfe
des Projektionsobjektives im Monitorbetrieb nutzbar ist,
wobei die Bedienungselemente und die Ladevorrichtung für
das Magazin für alle drei Betriebsarten dem Betreiber zugewandt sind.

Die Vorrichtung muß zum Sortieren von Dias verwendbar sein,
d. h., es muß eine Vorrichtung existieren, die zur gleichzeitigen Aufnahme von maximal 37 Dias geeignet ist, so
daß diese gleichzeitig und gleichmäßig durchleuchtet und
vom Betrachter überblickt werden können.

Die dem Teil 1.1 des Hauptanspruchs erfindungsgemäße Lösung
der Aufgabe ist eine Angabe zur Reihenfolge der optischen
Glieder: eine Lampe, ein Kondensorsystem und ein Projektionsobjektiv gefolgt von entweder einer Projektionswand
oder einem Spiegel und einer Mattscheibe; bei Verwendung
eines Projektionsobjektivs mit konstanter Brennweite wird
zwischen diesem und dem Spiegel eine Linse eingefügt.

Somit benutzen die zwei alternativen Betriebsformen vorteilhaft nur die jeweiligen für ihre Erzielung notwendigen
optischen Glieder. Diese Reihenfolge ist als optimal
anzusehen, weil auf diese Weise lichtstarke, kontrastreiche, kurz - qualitativ hochwertige Bilder erzeugbar sind.
Zudem ist zur Kostenersparnis die Möglichkeit gegeben,
anstelle eines Vario-Objektivs (verschiedene Brennweiten
sind für die zwei Betriebsformen vonnöten) eine Linse vor
das Objektiv zu schieben, indem diese Linse mit dem Spiegel mechanisch verbunden ist und so nur bei der Betriebsform benutzt wird, bei der sie notwendig ist.

Die erfindungsgemäße Lösung der Aufgabe entsprechend Teil 1.2 des Hauptanspruchs ist dadurch gegeben, daß der Wechsel der Betrachtungsart, Projektion - Mattscheibe, durch eine stoffschlüssige, mechanisch bewegliche Zwangskopplung von Mattscheibe, Spiegel, Gehäuse und Projektionsobjektiv sowie, je nach Art des Projektionsobjektivs, eine Linse erwirkbar ist. Hiermit wird eine besonders vorteilhafte Bedienungseinfachheit mit gleichzeitiger Bedienungssicherheit erreicht; denn alle Einheiten der Diabetrachtungsvorrichtung, die am Wechsel der Betriebsform beteiligt sind, bewegen sich nur erzwungenermaßen gemeinsam in eine der zwei Betriebsformen hinein. So bedarf es lediglich eines Handgriffs, um die Diabetrachtungsvorrichtung von der Ruhestellung in den Monitorbetrieb zu bringen.

Die Aufgabe wird des weiteren durch den Teil 1.3 des Hauptanspruchs erfindungsgemäß gelöst dadurch, daß der Diabetrachtungsvorrichtung zur gleichzeitigen Betrachtung aller Dias eines Filmes ein transparenter Diaträger über die Mattscheibe selbsthemmend aufsteckbar ist. Mit diesem Anspruch wird die Diabetrachtungsvorrichtung zu einer echten Sortiereinheit. So können z. B. 36 Dias eines Kleinbildfilmes gleichzeitig durchleuchtet, betrachtet und sortiert werden.

Des weiteren wird die Aufgabe erfindungsgemäß (Anspruch 2, 3 ) dadurch gelöst, daß der Spiegel gegebenenfalls zusammen mit der Linse in den Strahlengang hinter das Projektionsobjektiv (von der Lichtquelle aus betrachtet) für den Mattscheibenbetrieb auf einer Spiegellagerung einschiebbar und der Spiegel vor der Aussparung des Gehäuses ausklappbar ist und daß der Spiegel gegebenenfalls zusammen mit der Linse für die Wandprojektion aus dem Strahlengang auf der Spiegellagerung herausschiebbar ist bei gleichzeitig eingeklapptem Zustand.

Der Vorteil liegt in der Verschiebbarkeit des Spiegels selbst, da er klein, unkompliziert und, weil durch eine Spiegellagerung geführt, leicht in seiner Lage veränderbar ist und zudem bei Projektionsbetrieb der Lichtstrahl direkt zur Projektionswand gelangen kann (lichtstarke Projektion) ohne eine Umstellung des Gehäuses, des Objektivs etc.

Entsprechend der erfindungsgemäßen Lösung der Aufgabe aus Anspruch 4 - nämlich, daß bei Verwendung eines Projektionsobjektivs mit konstanter Brennweite alternativ eine Linse zwischen das Projektionsobjektiv und Spiegel eingebracht wird oder der Spiegel selbst in elliptischer Gestalt ausgeführt ist - ist der Vorteil in den Kostenersparnissen für ein aufwendiges Vario-Objektiv (Brennweite variabel) zu sehen. Ferner sind bei der Kopplung von Planspiegel und Linse durch eine mechanische Verbindung, Funktionslogik und -sicherheit auf einfachste Weise gewährleistet.

Ferner wird die Aufgabe erfindungsgemäß entsprechend Anspruch 5 dadurch gelöst, daß die Mattscheibe im Monitorbetrieb in einer zur Blickrichtung des Betrachters orthogonalen Ebene liegt. Es treten somit keine störenden perspektivischen Veränderungen auf.

Des weiteren erfüllt die Erfindung mit Anspruch 6 die Aufgabe dadurch, daß die der Bedienungsfront abgewandte Seite des Mattscheibenträgers so ausgelegt ist, daß sie den Spiegel in einer dem Gerät anliegenden Weise hält und als Schiene bei Seitenverschiebung des Spiegels dient, solange der Mattscheibenträger mit der Mattscheibe auf dem Gerät aufliegt oder nur die der Bedienungsfront zugewandte Seite des Mattscheibenträgers (mit der integrierten Mattscheibe) aufgestellt ist (in beiden Fällen ist Projektionsbetrieb gegeben).

Bei genannter Aufstellung wird das Magazin mit den Dias darin zugänglich, was bei Projektionsbetrieb von Vorteil ist, jedoch der Spiegel am Gehäuse anliegend verbleibt; dieses gilt ebenso, wenn ein Eingriff ins Magazin nicht nötig ist und der Mattscheibenträger mit der Mattscheibe flach auf dem Gehäuse anliegt.

Nach Anspruch 7 wird die Aufgabe erfindungsgemäß dadurch gelöst, daß der Aufstellmechanismus und die Oberseite der Diabetrachtungsvorrichtung selbst bei Ruhestellung durch den Mattscheibenträger und die Mattscheibe bündig abdeckbar sind.

Es ergibt sich der Vorteil, daß das nicht benutzte Gerät eine geschlossene Einheit darstellt, dessen Mechanik geschützt im Innern liegt.

Gemäß Erfindung nach Anspruch 8 wird die Aufgabe so gelöst, daß im Monitorbetrieb die Tiefe der Diabetrachtungsvorrichtung einer Regaltiefe und ihre Höhe einer Regalhöhe entspricht.

Der Vorteil besteht darin, daß die Diabetrachtungsvorrichtung zwecks Monitorbetrieb am Verwahrungsort (Regal) belassen werden kann, weil bei dieser erfinderischen Lösung die Gerätemessungen heutigen Mobiliardimensionen entsprechend ausfallen.

Des weiteren wird die Aufgabe entsprechend 9 erfindungsgemäß dadurch gelöst, daß der stufenförmige Diaträger mit Taschen versehen ist, die kerbförmig spitzwinklig ausgeführt eine solche Tiefe haben, daß eine Rahmenseite des
Dias darin einsteckbar ist, ohne daß der transparente Teil
des gerahmten Dias durch Rahmen anderer Dias oder einen
Absatz in dem stufenförmigen Diaträger ungleichmäßig ausgeleuchtet wird;
des weiteren ist die erfindungsgemäße Lösung der Aufgabe
durch den Unteranspruch 10 dergestalt, daß eine Tasche
durch den Rahmen eines solchen Dias überlappt wird,
welches auf dem Diaträger tiefer in bezug auf seine Neigung der Bedienungsfront hin liegt.

Äußerst vorteilhaft ist dieser Teil der Erfindung, weil es
so gelingt, auf einer kleineren Fläche als die der entsprechenden Summe der Einzelflächen von gerahmten Dias
eben diese unterzubringen, welche zudem am Kippen gehindert sind. Es sind somit bei den Abmessungen entsprechend Anspruch 8 bis zu 36 Stück Kleinbilddias
(ein Kleinbildfilm) auf dem ausgeleuchteten Mattscheibenteil unterbringbar.

Ein Ausführungsbeispiel der Erfindung ist in den Zeichnungen dargestellt und wird im folgenden näher beschrieben. Es zeigen

    Figur 1    eine räumliche Darstellung der Diabetrachtungsvorrichtung in Ruhestellung

    Figur 2    eine Seitenansicht mit einem Ausschnitt
                  durch die optische Achse im Projektionsbetrieb mit niedergeklapptem Monitor

Figur 3    einen senkrechten Schnitt durch die optische
           Achse im Monitorbetrieb

Figur 4    eine Seitenansicht der Diabetrachtungsvor-
           richtung im Projektionsbetrieb mit zugäng-
           lichem Diamagazin

Figur 5    eine Seitenansicht der Diabetrachtungsvor-
           richtung im Monitorbetrieb mit aufzusetzen-
           dem Diaträger für Oberblicksbetrachtungen

Figur 6    eine Seitenansicht des aufgesetzten Diaträgers und eine Frontalaufsicht auf einen
           Schnitt durch diesen Punkt

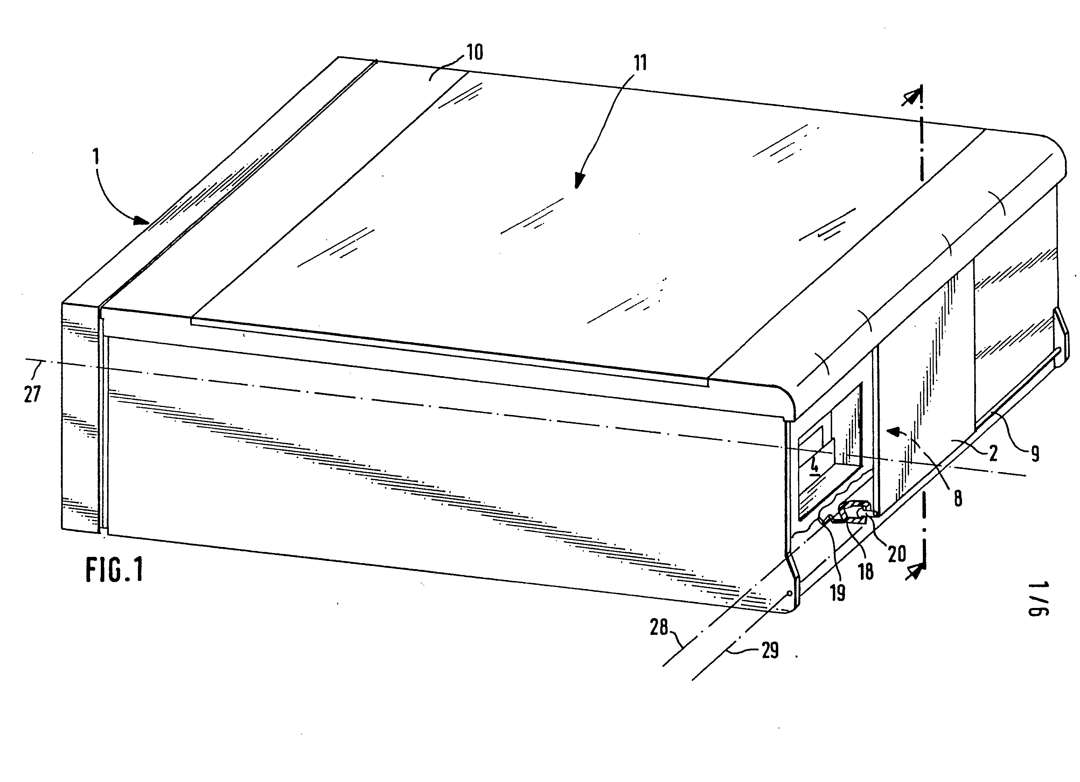

Die in Figur 1 dargestellte Diabetrachtungsvorrichtung ist in Ruhestellung, d. h., die Mattscheibe 11 - vom Mattscheibenträger 10 bündig gefaßt - schließt als Deckel, dem Gehäuse 22 aufliegend, dieses flach ab. Der Spiegel 2, durch die Spiegellagerung 9 mit dem Gehäuse 22 gelenkig verbunden, ist um seine Schwenkachse 29 an das Gehäuse 22 so geklappt, daß er den Objektivschacht 8 vollständig abdeckt und verschließt.

Eine Kipphebelleiste 18, die um die Kipphebelachse 28 schwenkbar ist, wird durch die Zugfeder 19 am Zapfen 20 des Spiegels 2 zum Eingriff gebracht.

Die dem Spiegel 2 gegenüberliegende Gehäuseseite ist die Bedienungsfront 1.

Das Magazin 4 wird auf der Magazinlängsachse 27 so geführt, daß die entsprechenden Gehäuseöffnungen auf Spiegelseite und Bedienungsfront 1 liegen, wobei die Transportrichtung des Magazins 4 von der Bedienungsfront 1 zur Spiegel- (bzw.

Projektions-) -seite hin verläuft.


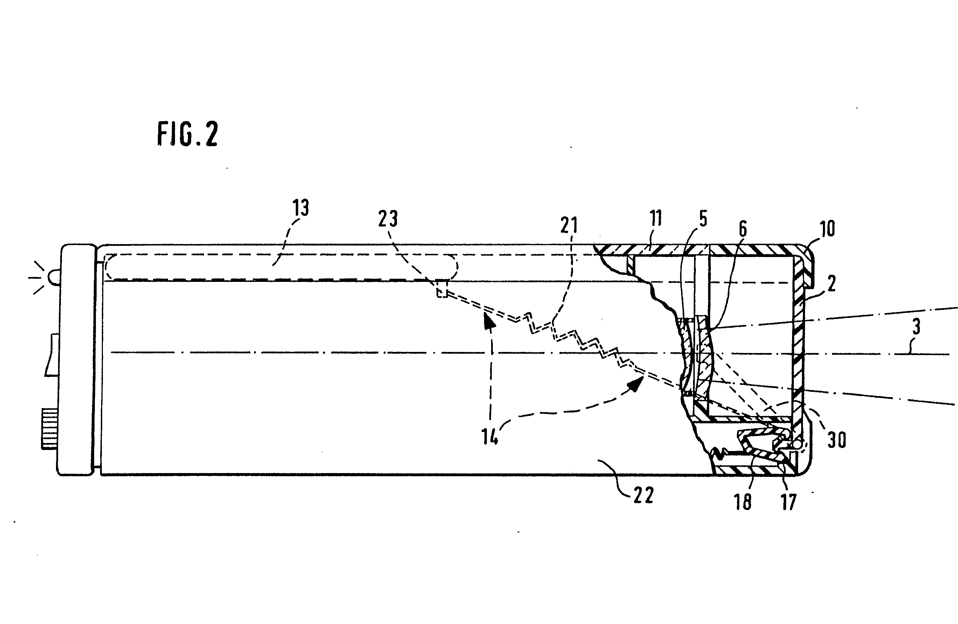

Figur 2 zeigt die Diabetrachtungsvorrichtung von einer Längsseite mit einem Schnitt, der durch die optische Achse 3 verläuft.


Die Diabetrachtungsvorrichtung befindet sich im Projektionsbetrieb. Der Spiegel 2 ist mit der Linse 6 (über das Führungsgestänge 30) aus dem Projektionsstrahlengang herausgeschoben. Der Spiegel 2 wird vom Mattscheibenträger 10 am Gehäuse 22 anliegend gehalten. Die Kipphebelleiste 18 ist durch den Spiegel 2 niedergedrückt, so daß die Auslenkung der auf jeder Gehäuselängsseite befindlichen Gestänge 14 mit ihren Kompensationsfedern 21, der eingeklappten Stellung der Aufstellspreizen 13 und Mattscheibenträger 10 mit Mattscheibe 11 entspricht. Die Gestänge 14 sind hierzu gelenkig an der Kipphebelleiste 18 und dem Zapfen 23 der Aufstellspreizen 13 gelagert. Der Kipphebelleiste 18 ist als jeweiliger Anschlag das Gehäuse 22 so zugeordnet, daß eine Begrenzung der Schwenkbarkeit entsprechend den Betriebslagen des Spiegels 2 gegeben ist.


Die Aufstellspreizen 13 sind bei niedergeklapptem Mattscheibenträger 10 in Aussparungen des Gehäuses 22 bündig auf den beiden Gehäuselängsseiten eingepaßt.


Das Projektionsobjektiv 5 ist so angeordnet, daß der das Gehäuse 22 verlassende Lichtkegel nicht durch die Gehäusegeometrie vignettiert wird.


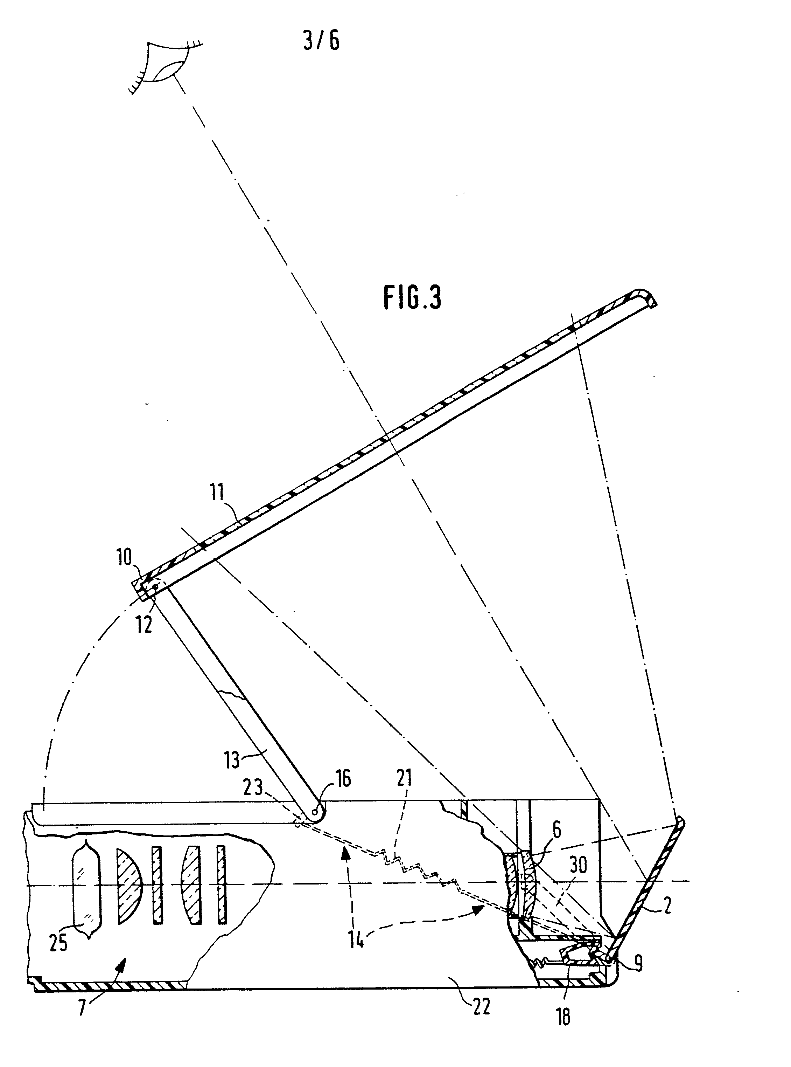

In Figur 3 ist die Diabetrachtungsvorrichtung in Seitenansicht mit teilenweisen, durch die optische Achse 3 verlaufenden Brüchen versehen.

Zwecks Monitorbetrieb sind der Spiegel 2 und die Linse 6
- diese durch das Führungsgestänge 30 in den Strahlengang
geschoben, der Spiegel 2 ist zudem ausgeklappt, und es sind
die Aufstellspreizen 13 sowie der Mattscheibenträger 10 mit
der integrierten Mattscheibe 11 aufgestellt.

Mattscheibenträger 10 und Aufstellspreizen 13 sind durch
selbsthemmende Gelenke 12 beweglich verbunden. Die Aufstell
spreizen 13 rasten zudem in den Gelenken 16 des Gehäuses 22.
Die bei Aufrichtung der Aufstellspreizen 13 auf einer Kreisbahn um die Gelenke 16 schwenkenden Zapfen 23 bewirken
über die Gestänge 14 mit ihren Kompensationsfedern 21 eine
Aufwärtsbewegung der Kipphebelleiste 18, die ihrerseits den
Spiegel 2 um die Spiegellagerung 9 in die Kippstellung
bringt, die den Strahlengang von der Lampe 25 über das Kondensorsystem 7 und dem Projektionsobjektiv 5 kommend so
umlenkt, daß dieser die Mattscheibe 11 vollständig und perspektivisch unbeeinflußt ausleuchtet.

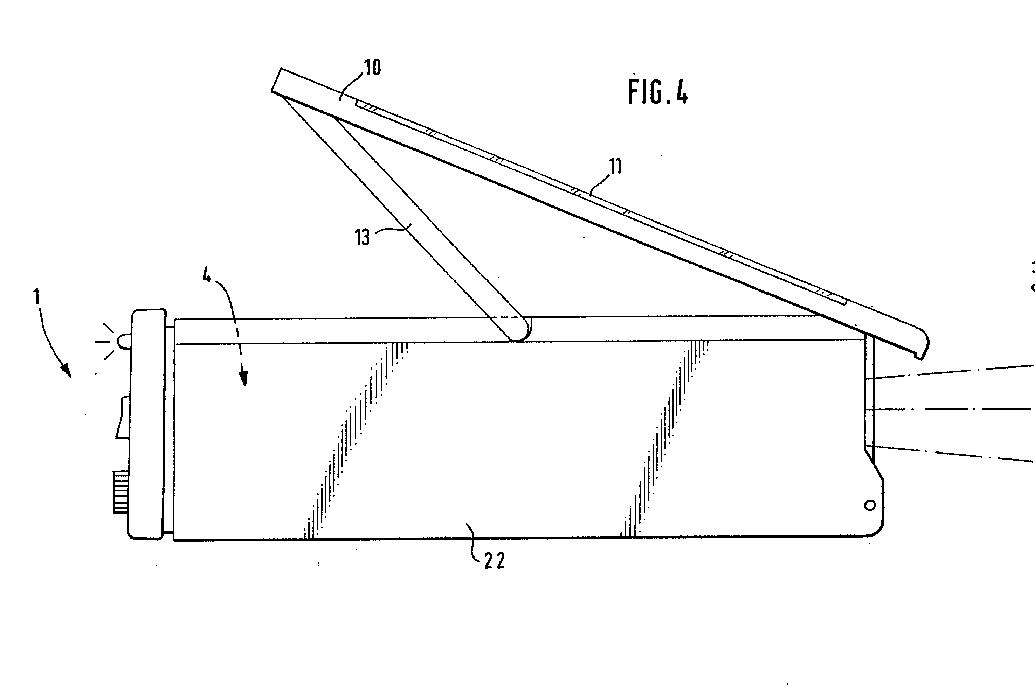

Figur 4 zeigt die Diabetrachtungsvorrichtung in Seitenansicht im Projektionsbetrieb mit von oben zugänglichem
Magazin 4, dadurch erwirkt, daß die Aufstellspreizen 13
den die Mattscheibe 11 tragenden Mattscheibenträger 10
auf der der Bedienungsfront 1 zugewnadten Seite hochstellen und der Mattscheibenträger 10 auf der Oberkante des
Gehäuses 22 der der Bedienungsfront gegenüberliegenden
Spiegelseite aufliegt, aber nicht in den Strahlengang
hineinragt.

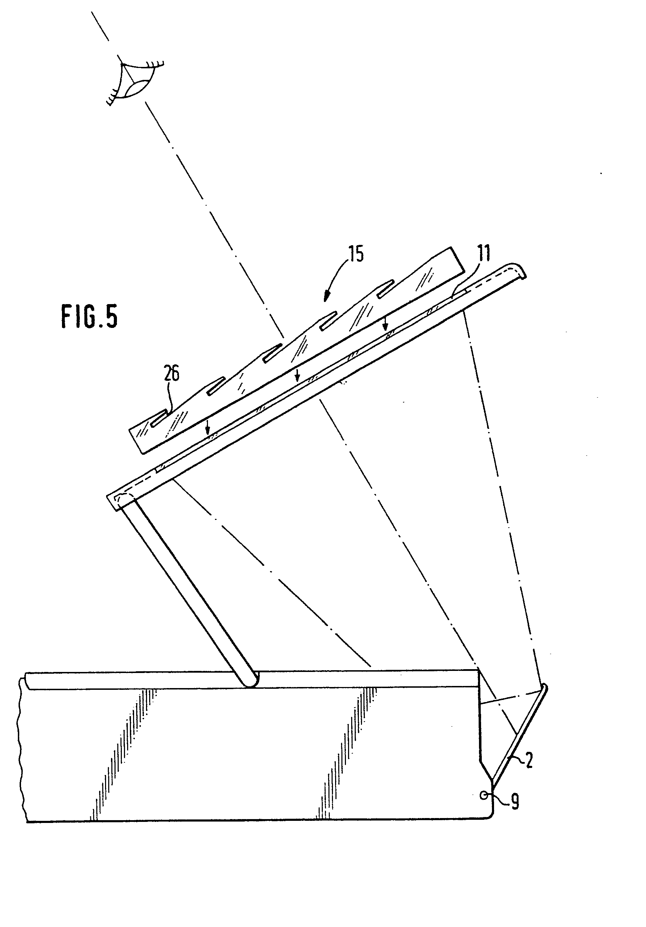

In Figur 5 ist der aufsteckbare, transparente Diaträger 15
im Aufsteckvorgang dargestellt.

Die Betriebsform entspricht dem Monitorbetrieb mit ausgeklapptem Spiegel 2, der auf der Spiegellagerung 9 in den
Strahlengang eingeschoben und ausgeklappt ist, so daß das
Licht zur Mattscheibe 11 gelangt, um diese und den Diaträger 15 mit den in die Taschen 26 eingesetzten Dias zu
durchleuchten.

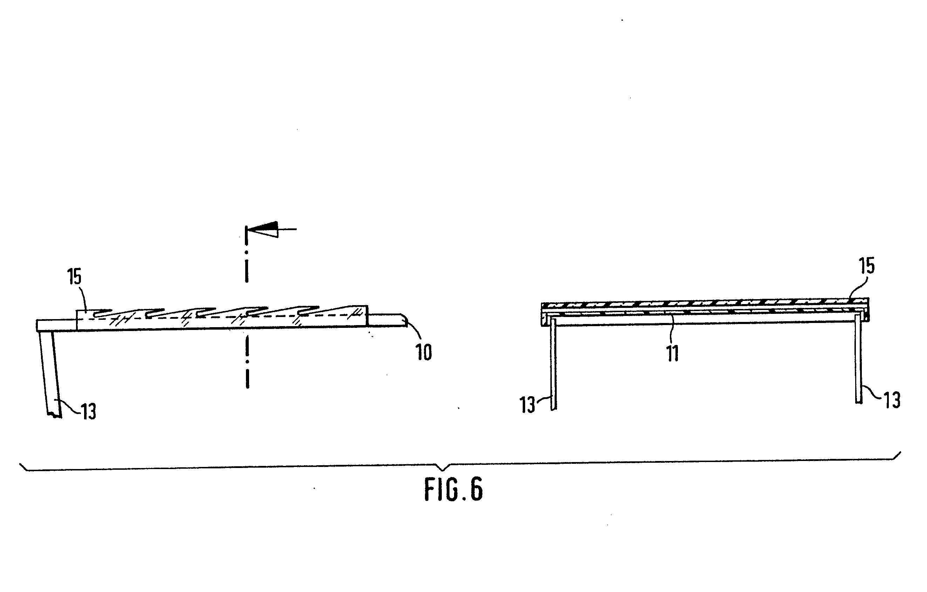

In Figur 6 ist der Diaträger 15 über die Mattscheibe 11
auf den Mattscheibenträger 10 selbsthemmend aufgesteckt,
und letzterer ist in gelenkiger Verbindung mit den Aufstellspreizen 13.

Die Darstellungen zeigen eine Seitenansicht und einen
Querschnitt bezogen auf die Längsachse der Diabetrachtungsvorrichtung.

Der Diaträger 15 wird durch Kraftschluß auf dem Mattscheibenträger 10 gehalten, seine Lage und Geometrie
sind der der Mattscheibe 11 angepaßt.

**0050761**

ROLLEI-WERKE            25.11.1981

  Franke & Heidecke        A 1212 EU

  GmbH & Co KG

Patentansprüche

1. Diabetrachtungsvorrichtung

- mit einem Gehäuse

- darin eine Lampe, ein Kondensorsystem und ein oder mehrere Projektionsobjektive sich befinden,

- die alle auf der optischen Achse angeordnet sind,

- diese Vorrichtung auf einer Projektionswand bzw. einer Mattscheibe ein Bild entsprechend eines Diapositivs erzeugt,

- die Mattscheibe als Teil der Vorrichtung aufstellbar ist,

- und diese über einen Spiegel das Licht erhält,

- das Licht, welches die gesamte Bildinformation des Dias enthält,

d a d u r c h  g e k e n n z e i c h n e t ,

1.1 daß die Reihenfolge der optischen Glieder ist:

eine Lampe (25)
ein Kondensorsystem (7) und
ein Projektionsobjektiv (5)

- 2 -                                    0050761

gefolgt von entweder:

einer Projektionswand

oder:
einer Linse (6) bei Verwendung eines Projektionsobjektivs (5) mit konstanter Brennweite,

einem Spiegel (2)
und
einer Mattscheibe (11),

1.2  und daß der Wechsel der Betrachtungsart, Projektion - Mattscheibe, durch eine stoffschlüssige, mechanisch bewegliche
Zwangskopplung von Mattscheibe (11), Spiegel (2), Gehäuse (22)
und Projektionsobjektiv (5) sowie je nach Art des Projektionsobjektivs (5) eine Linse (6) erwirkbar ist,

1.3  und daß der Diabetrachtungsvorrichtung zur gleichzeitigen Betrachtung aller Dias eines Films ein transparenter Diaträger
(15) über die Mattscheibe (11) selbsthemmend aufsteckbar ist.

2.  Diabetrachtungsvorrichtung nach Anspruch 1.1, d a d u r c h
g e k e n n z e i c h n e t , daß der Spiegel (2) gegebenenfalls zusammen mit der Linse (6) in den Strahlengang hinter
das Projektionsobjektiv (5), von Lichtquelle aus betrachtet,
für den Mattscheibenbetrieb auf die Spiegellagerung (9) einschiebbar und der Spiegel (2) vor der Aussparung (8) des Gehäuses (22) ausklappbar ist.

3.  Diabetrachtungsvorrichtung nach Anspruch 1.1 und 2, d a -
d u r c h  g e k e n n z e i c h n e t , daß der Spiegel
(2) gegebenenfalls zusammen mit der Linse (6) für die Wandprojektion aus dem Strahlengang auf der Spiegellagerung (9)
herausschiebbar ist bei gleichzeitig eingeklapptem Zustand.

4.  Diabetrachtungsvorrichtung nach Anspruch 1.1, 2 und 3, d a d u r c h   g e k e n n z e i c h n e t  , daß bei Verwendung eines Projektionsobjektivs (5) mit konstanter Brennweite alternativ eine Linse zwischen das Projektionsobjektiv (5) und Spiegel (2) eingebracht wird oder Spiegel (2) in elliptischer Gestalt ausgeführt ist.

5.  Diabetrachtungsvorrichtung nach Anspruch 1.2, d a d u r c h   g e k e n n z e i c h n e t  , daß die Mattscheibe (11) im Monitorbetrieb in einer zur Blickrichtung des Betrachters orthogonalen Ebene liegt.

6.  Diabetrachtungsvorrichtung nach Anspruch 1.2 und 5, d a d u r c h   g e k e n n z e i c h n e t  , daß die der Bedienungsfront (1) abgewandte Seite des Mattscheibenträgers (10) so ausgelegt ist, daß sie den Spiegel (2) in einer dem Gerät anliegenden Weise hält und als Schiene bei Seitenverschiebung des Spiegels (2) dient, solange der Mattscheibenträger (10) mit der Mattscheibe (11) auf dem Gerät aufliegt oder nur die der Bedienungsfront (1) zugewandte Seite des Mattscheibenträgers (10) mit der integrierten Mattscheibe (11) aufgestellt ist, wobei in beiden Fällen Projektionsbetrieb gegeben ist.

7.  Diabetrachtungsvorrichtung nach Anspruch 1.2, 5 und 6, d a d u r c h   g e k e n n z e i c h n e t  , daß der Aufstellmechanismus und die Oberseite der Diabetrachtungsvorrichtung selbst bei Ruhestellung dieser durch den Mattscheibenträger (10) und  die Mattscheibe (11) bündig abdeckbar sind.

8.  Diabetrachtungsvorrichtung nach Anspruch 1.2, 5, 6 und 7, d a d u r c h   g e k e n n z e i c h n e t  , daß im Monitorbetrieb die Tiefe der Diabetrachtungsvorrichtung einer Regaltiefe und die Höhe einer Regalhöhe entspricht.

9. Diabetrachtungsvorrichtung nach Anspruch 1.3, d a - d u r c h   g e k e n n z e i c h n e t , daß der stufenförmige Diaträger (15) mit Taschen (26) versehen ist, die kerbförmig spitzwinklig ausgeführt eine solche Tiefe haben, daß eine Rahmenseite des Dias darin einsteckbar ist, ohne daß der transparente Teil des gerahmten Dias durch Rahmen anderer Dias oder einen Absatz in dem stufenförmigen Diaträger (15) ungleichmäßig ausgeleuchtet wird.

10. Diabetrachtungsvorrichtung nach Anspruch 1.3 und 9, d a d u r c h   g e k e n n z e i c h n e t , daß eine Tasche (26) durch den Rahmen eines solchen Dias überlappt wird, welches auf dem Diaträger (15) tiefer in bezug auf seine Neigung zur Bedienungsfront (1) hin liegt.

FIG.1

0050761

FIG.2

FIG.3

FIG.4

FIG.5

FIG.6